# EUROPÄISCHE PATENTSCHRIFT

(11) **EP 2 425 141 B1**
(45) Veröffentlichungstag und Bekanntmachung des Hinweises auf die Patenterteilung: **06.11.2013**
(21) Anmeldenummer: 10700709.8
(22) Anmeldetag: 15.01.2010
(51) Int. Cl.: F16D 27/112, F16D 27/11

(54) **ELEKTROMAGNETISCHE REIBUNGSKUPPLUNG MIT OSZILLIERENDEN POLFLÄCHEN**
ELECTROMAGNETIC FRICTION CLUTCH HAVING OSCILLATING POLE FACES
EMBRAYAGE À FRICTION ÉLECTROMAGNÉTIQUE À FACES POLAIRES OSCILLANTES

(30) Priorität: 29.04.2009 DE 102009019139
(43) Veröffentlichungstag der Anmeldung: 07.03.2012
(73) Patentinhaber: Kendrion Linnig GmbH, 88677 Markdorf (DE)
(72) Erfinder: GEBHART, Manfred, 78462 Konstanz (DE)
(74) Vertreter: Dobler, Markus
(86) Internationale Anmeldenummer: PCT/EP2010/000181
(87) Internationale Veröffentlichungsnummer: WO 2010/124749

(56) Entgegenhaltungen:
- EP-A1- 0 216 514
- EP-A1- 1 116 895
- DE-A1-102004 042 687
- DE-A1-102005 025 546
- DE-B1- 2 055 678
- DE-U1-202004 009 184
- US-A- 3 214 084
- US-A- 5 125 255

## Beschreibung

Die Erfindung betrifft eine elektromagnetische Reibungskupplung nach dem Oberbegriff des Anspruchs 1.

### Stand der Technik:

Es sind verschiedene elektromagnetische Reibungskupplungen bekannt, deren Kupplungsscheiben eine unebene Reibfläche aufweisen. Es sind elektromagnetische Kupplungen bekannt, deren Ankerscheiben vom magnetischen Fluss mehrfach durchflutet werden. Deren Polflächen sind eben ausgebildet. Durch die Mehrfachdurchflutung wird eine Erhöhung des Reibmoments erzielt.

Eine gattungsgemäße Reibkupplung ist aus EP 0 216 514 bekannt.

### Aufgaben und Vorteile der Erfindung

Der Erfindung liegt die Aufgabe zugrunde, eine Kupplung bereitzustellen, die ein vergleichweise vergrößertes maximales Drehmoment bei raumsparender Bauweise überträgt.

Diese Aufgabe wird durch die Merkmale des Anspruchs 1 gelöst. In den abhängigen Ansprüchen sind vorteilhafte und zweckmäßige Weiterbildungen der Erfindung angegeben.

Die Erfindung geht von einer elektromagnetischen Reibungskupplung mit zwei Kupplungsscheiben aus, wobei eine Kupplungsscheibe eine axial bewegliche Ankerscheibe umfasst. Die Kupplungsscheiben weisen mehrere konzentrisch kreisförmige weichmagnetische Ringbereiche auf, die voneinander zumindest teilweise magnetisch isoliert sind. Die axial bewegliche Ankerscheibe weist mindestens einen magnetisch leitenden Ringbereich auf, der zwei magnetisch isolierte Ringbereiche der zweien Kupplungsscheibe magnetisch verbindet. Der Kern der Erfindung besteht nun darin, dass die Kupplungsscheiben im radialen Querschnitt betrachtet, oszillierende Polflächen an den weichmagnetischen Ringbereichen aufweisen, welche zumindest teilweise als Reibflächen ausgebildet sind, und über welche eine Anziehung bei einem Schalten der Kupplung stattfindet, wobei das radiale Querschnittsprofil beider Kupplungsschreiben zumindest im Bereich von Reibflächen passgenau aufeinander abgestimmt ist.

Im Folgenden wird die Seite einer Kupplungsscheibe, die zur jeweils gegenüberliegenden Kupplungsscheibe gewandt ist, als Arbeitsseite bezeichnet. Das Oszillieren der Polflächen ist so zu verstehen, dass die Kupplungsscheiben an der Oberfläche ihrer jeweiligen Arbeitsseite im Querschnitt ein Profil aufweisen, das mit wachsendem Radius abwechselnd in axialer Richtung steigende und fallende Bereiche aufweist. Dies bewirkt, daß die Oberflächen der Kupplungsscheiben an ihrer Arbeitsseite konzentrische Erhebungen bzw. Vertiefungen zeigen. Um die Drehachse umlaufend ist das Oberflächenprofil der Kupplungsscheiben vorzugsweise überwiegend gleichmäßig glatt, insbesondere in Bereichen in denen sich die Kupplungsscheiben im eingekuppelten Zustand berühren. Die Drehsymmetrie der Kupplungsscheiben auf der Arbeitsseite kann in Bereichen gestört sein, die insbesondere gegenüber den Reibflächen axial zurückgesetzt sind.

Gegenüber ebenen Polflächen bietet der axial über den Radius oszillierende Verlauf den Vorteil, dass die Fläche, über die eine magnetische Anziehung stattfinden kann, vergößert ist. Insbesondere wenn die konzentrischen Erhebungen und Vertiefungen der beiden Kupplungsscheiben so zueinander versetzt sind, dass sie zumindest teilweise ineinander hineinreichen und die Oberflächen ihrer Arbeitsseiten im eingekuppelten Zustand ineinandergreifen, bieten die oszillierenden Polflächen den Vorteil, dass der Kraftschluss gegenüber Stößen und Schwingungen senkrecht zur Drehachse unempfindlicher wird.

Besonders zweckmäßig ist eine Ausführung der Erfindung, bei der die weichmagnetischen Ringbereiche einer Kupplungsscheibe zwischen magnetischen Isoliermitteln eines Ringbereichs einer Kupplungsscheibe im Querschnittsverlauf ein Maximum in axialer Richtung aufweisen. Hierbei erhalten die weichmagnetischen Ringbereiche vorteilhafterweise ein axiales Querschnittsprofil, das mit zunehmendem Radius eine steigende und eine fallende Flanke in axialer Richtung aufweist und zwischen diesen Flanken ein Maximum ausbildet. Somit können die magnetisch leitenden Bereiche für ein gegenseitiges Ineinandergreifen der Kupplungsscheiben vorbestimmt werden, wobei die Flanken zumindest teilweise als Polflächen wirken. Hieraus ergibt sich gegenüber ebenen Polflächen der Vorteil, dass der magnetische Fluß nicht mehr vollständig seine Richtung umkehren muß, um einen magnetisch leitenden Bereich zu durchfluten, so daß vorteilhaft magnetische Streuverluste verringert und der Wirkungsgrad der magnetischen Krafterzeugung verbessert werden können. Dabei bietet sich zudem die Möglichkeit, den magnetischen Fluß über einen vergleichweise kürzeren Pfad durch die ineinander greifenden, weichmagnetischen Ringbereiche im eingekuppelten Zustand zu leiten, so daß die Wirkung von Bereichen mit unerwünschten magnetischen Kurzschlüssen gemieden werden kann.

Erfindungsgemäß bilden die Polflächen zumindest teilweise Reibflächen. Weil an den Polflächen die stärksten Anziehungskräfte herrschen, bieten die magnetischen Polflächen die besten Bedingungen für eine Drehmomentübertragung durch Reibkontakt.

Des Weiteren ist erfindungsgemäß das radiale Querschnittsprofil beider Kupplungsscheiben passgenau aufeinander abgestimmt. Dies bietet zum Einen den Vorteil, dass die magnetischen Polflächen bei getrennter Lage der beiden Kupplungsscheiben in einem kleinen Abstand gehalten werden können. Beim Einschalten, beispielsweise des Elektromagneten, wirken daher starke Kräfte und ermöglichen ein schnelles Zuschalten der Kupplung. Weiterhin bewirkt die passgenaue Ausführung der Kupplungsflächen, dass der zur Verfügung stehende Flächeninhalt optimal für den Reibungskraftschluss genutzt werden kann.

In einer besonders bevorzugten Ausführung weisen die weichmagnetischen Ringbereiche konische Polflächen auf. Dies bietet den Vorteil, dass die Polflächen besonders einfach und genau hergestellt werden können.

Im radialen Querschnittsprofil der Arbeitsseite einer Kupplungsscheibe erscheinen die konischen Polflächen vorzugsweise als in axialer Richtung zur gegenüberliegenden Kupplungsscheibe hin linear ansteigende bzw. abfallende Flanken. Dadurch lässt sich ihre Dimensionierung einfacher berechnen.

Eine weitere bevorzugte Ausbildung der Erfindung zeichnet sich dadurch aus, dass die weichmagnetischen Ringbereiche einer Kupplungsscheibe umfänglich durch Spalte voneinander getrennt und dass die Ringbereiche durch Stege in radialer Richtung mechanisch fest miteinander verbunden sind. Die magnetische Isolation der weichmagnetischen Ringbereiche wird z.B. hierbei im Wesentlichen durch Materialabtragung, beispielsweise ausfräsen, hergestellt. Dabei kann Material, das zur festen mechanischen Verbindung der weichmagnetischen Ringbereiche untereinander vorgesehen ist, von der Materialabtragung ausgenommen werden. Die Strukturen dieser Kupplungsscheiben können so dimensioniert sein, dass nur noch wenige oder gar keine weiteren Bearbeitungsschritte zu ihrer Herstellung nötig sind. Zugleich werden Gewicht und Trägheitsmoment der Kupplungsscheiben vorteilhaft verringert, wodurch sich ihr Schaltverhalten verbessert.

Es erweist sich als günstig, dass die axial tiefere Berandung einer Pol- und/oder Reibfläche eines weichmagnetischen Ringbereichs einer Kupplungsscheibe an den Rand eines magnetisch isolierenden Bereichs in der Kupplungsscheibe stößt. Folglich liegen die isolierenden Bereiche einer Kupplungsscheibe in den Vertiefungen ihrer Arbeitsseite. Weil der magnetische Fluss im Wesentlichen durch die Polflächen an den ansteigenden und abfallenden Flanken der weichmagnetischen Bereiche durchgeleitet wird, bietet diese Anordnung der isolierenden Bereiche den Vorteil, dass der magnetische Fluss an den isolierenden Bereichen vorbeigeleitet wird und somit nur ein geringer Verlust durch Streufluss über die isolierenden Bereiche entstehen kann. Es ist zweckmäßig, dass die axial äußerste Erhebung eines weichmagnetischen Ringbereichs einer Kupplungsscheibe nur bis zur axial tiefsten Berandung einer Polfläche und/oder Reibfläche der gegenüberliegenden Kupplungsscheibe reicht, wenn die Kupplungsscheiben miteinander in Reibkontakt stehen. In angezogener Stellung greifen die Kupplungsscheiben vorzugsweise so ineinander, dass sie in axialer Richtung einen mittleren Bereich bilden, den der magnetische Fluss mit vergleichsweise geringen Richtungsänderungen durchfluten kann. Vorzugsweise kann die axiale Reichweite der weichmagnetischen Bereiche in die gegenüberliegende Kupplungsscheibe hierbei derart limitiert werden, dass an den isolierenden Bereichen kein oder kaum Streufluss entstehen kann, der die magnetische Anziehung an den Polflächen verringert. Somit verbessert auch diese Maßnahme den Wirkungsgrad der Kupplung.

Eine weitere zweckmäßige Ausführung der Erfindung sieht vor, dass zwischen weichmagnetischen Ringbereichen einer Kupplungsscheibe festes magnetisch isolierendes Material eingebracht ist und in dem magnetisch isolierenden Bereich zumindest teilweise eine Reibfläche ausgebildet ist. Auf diese Weise kann die Reibfläche weiter vergrößert werden und damit das übertragbare Moment vorteilhaft erhöht werden.

### Ausführungsbeispiel

Zeichnungen:
- Figur 1a: Schematische Darstellung einer halben elektromagnetischen Reibungskupplung im entkuppelten Zustand in der Ansicht der Schnittebene entlang der Drehachse S und einer radialen Richtung,
- Figur 1b: wie Figur 1a, jedoch im eingekuppelten Zustand,
- Figur 2: perspektivische Schnittansicht der halbierten Kupplungsscheiben im Reibkontakt mit Ansicht des Querschnitts entlang der Drehachse S.

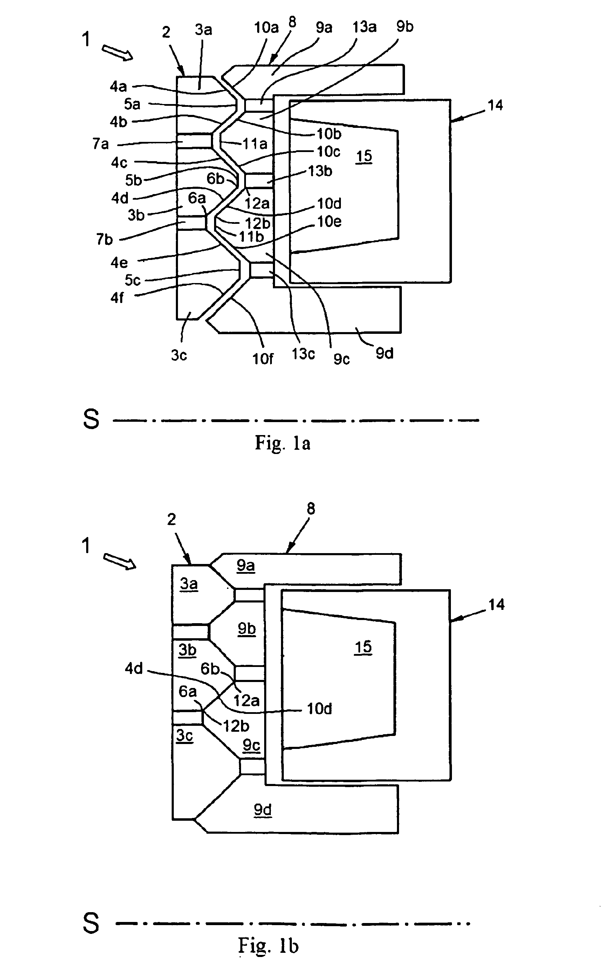

Die Figuren 1a und 1b zeigen schematisch eine beispielhafte Ausführung der Erfindung in den Zuständen einer nicht geschalteten Kupplung 1 in Figur 1a und einer geschalteten Kupplung 1 in Figur 1b. Die Darstellung beschränkt sich dabei auf die wesentlichen Bauteile, die Ankerscheibe 2, den Rotor 8, und den Elektromagneten 14 und zeigt nur die Konturen ihres Querschnitts im Raum oberhalb der Drehachse S.

Die Ankerscheibe 2 besteht aus drei weichmagnetischen Ringbereichen 3a, 3b, 3c, die durch die Schlitze 7a und 7b magnetisch voneinander getrennt werden. Der Rotor 8 weist vier konzentrische weichmagnetische Ringbereiche 9a, 9b, 9c und 9d auf. Der äußerste Ringbereich 9a sowie der innerste Ringbereich 9d sind in axialer Richtung weiter ausgedehnt, so dass sie den elektrischen Ringmagneten 14 in einem U-förmigen Profil teilweise umfassen. Die weichmagnetischen Ringbereiche des Rotors 9a, 9b, 9c, 9d werden ebenfalls von Schlitzen 13a, 13b und 13c magnetisch voneinander isoliert.

Im entkuppelten Zustand sind die Spulenwindungen 15 des Elektromagneten 14 stromlos, sodass die Ankerscheibe 2 in einer beabstandeten Position gehalten wird. Um die Kupplung 1 einzukuppeln, wie in Figur 1b dargestellt, wird die Spule 15 mit Strom versorgt. Der Elektromagnet 14 erzeugt einen magnetischen Fluss, der insbesondere durch die Ringbereiche 9a und 9d des Rotors 8 an dessen Arbeitsseite geführt wird. Dabei entsteht an seinen Polflächen 10a, 10b, 10c, 10d, 10e und 10f eine anziehende Wirkung auf die entsprechenden Polflächen 4a, 4b, 4c, 4d, 4e und 4f der Ankerscheibe 2. Die Polflächen 4a - 4f der Ankerscheibe 2 und diejenigen (10a bis 10f) des Rotors 8 übernehmen zugleich die Aufgabe von Reibflächen.

Die lineare Zunahme und Abnahme der axialen Materialstärke der weichmagnetischen Ringbereiche 3a - 3c, 9a - 9d an beiden Kupplungsscheiben 2, 8 lässt erkennen, dass die Polflächen 4a - 4f, 10a - 10f konisch ausgebildet sind. Alle Polflächen 4a - 4f, 10a - 10f sind in einem Winkel zur Drehachse S angestellt. Dargestellt ist ein Winkel von etwa 45°. Vorzugsweise werden die Polflächen in Winkeln von weniger als 60° zur Drehachse angestellt, wobei sich Winkel von 45° und kleiner als geeigneter erwiesen haben. Besonders bevorzugt werden Anstellwinkel von 30° und weniger, beispielsweise 27°. Die steiler angestellten Pol- und Reibflächen greifen dabei wie Keile ineinander, wodurch das übertragbare Drehmoment der Kupplung weiter erhöht wird. Um ein Verklemmen der Kupplungsscheiben möglichst zu vermeiden, werden vorzugweise Anstellwinkel von 20° und größer verwendet.

Jeder weichmagnetische Ringbereich, beispielsweise 3b, der Ankerscheibe 2 wird auf der Arbeitsseite von zwei konischen Flächen, z.B. 4c und 4d, begrenzt, von denen eine der Drehachse S zugewandt und die andere der Drehachse S abgewandt ist. So bilden die Polflächen 4a - 4f an der Arbeitsseite der Ankerscheibe im Querschnitt eine oszillierende Kontur, die mit zunehmenden Radius abwechselnd auf die gegenüberliegende Rotorscheibe zuläuft bzw. sich von ihr wieder entfernt.

Die weichmagnetischen Ringbereiche 9a, 9b, 9c, 9d des Rotors 8 werden in ähnlicher Weise von Polflächen begrenzt, die passgenau zu den Polflächen der Ankerscheibe abwechselnd zur Drehachse S hin- bzw. abweisend angestellt sind. Die Ringelemente 9a und 9d haben jeweils nur eine Polfläche, da sie mit ihrer axialen Verlängerung den vom Elektromagneten 14 erzeugten magnetischen Fluß bündeln und an die Arbeitsseiten der Kupplungsscheiben 2,8 führen.

Die weichmagnetischen Ringbereiche 3a - 3c, 9a - 9d des Rotors 8 und der Ankerscheibe 2 sind zueinander so versetzt, dass die beiden Kupplungsscheiben 2,8 bereits im getrennten Zustand ineinander hineinreichen. Dabei stehen sich paarweise jeweils eine Polfläche des Rotors 8, z.B. 10d, und eine Polfläche der Ankerscheibe 2, z.B. 4d, gegenüber. Der innere z.B. kreisförmig umlaufende Rand 6a der Polfläche 4d stößt an den magnetisch trennenden Bereich 7b, der eine Vertiefung in der Ankerscheibe 2 bildet. An ihrem äußeren z.B. kreisförmig umlaufenden Rand 6b grenzt die Polfläche 4d der Ankerscheibe 2 an die Stirnfläche 5b, die die axiale Erhebung des weichmagnetischen Ringbereichs 3b in Richtung des Rotors beschränkt. In entsprechender Weise wird die Polfläche 10d des Rotors 8 an ihrem äußeren Rand 12a von der Vertiefung des magnetisch isolierenden Bereichs 13b und an ihrem inneren Rand 12b von der Stirnfläche 11b des weichmagnetischen Ringbereichs 9c an der axial äußersten Erhebung zur Ankerscheibe 2 hin begrenzt. Die Figur 1b zeigt, dass durch eine passgenaue Ausführung der Polflächen 4a - 4f und 10a - 10f an beiden Kupplungsscheiben 2,8 alle Polflächen zugleich als Reibflächen genutzt werden. Bei Schließen der Kupplung treffen beispielsweise die Ränder 6a, 6b der Ankerpolfläche 4d genau auf die Ränder 12b, 12a der Rotorpolfläche 10d. Dadurch überdecken sich die Polflächen 4d, 10d genau und nutzen die zum Reibungskraftschluß verfügbare Fläche vollständig aus.

Die Bereiche größter Materialstärke der weichmagnetischen Ringe 3a - 3c, 9a - 9d reichen dabei jeweils in die Vertiefung der gegenüberliegenden Kupplungsscheibe, an denen sich die magnetisch isolierenden Schlitze 7a, 7b, 13a, 13b, 13c befinden. Dabei befinden sich an den Bereichen maximaler Materialstärke der Ankerscheibe 2 Stirnflächen 5a, 5b und 5c, die an den oberen Rand der Polflächen 4a, 4b, 4c, 4d, 4e und 4f angrenzen. Sie überdecken den radialen Bereich der Schlitze 13a, 13b und 13c der Rotorscheibe. Gleichermaßen werden die Schlitze der Ankerscheibe 7a, 7b von den Stirnflächen des Rotors 11a, 11b deckungsgleich überlagert.

Beim Einschalten der Stromversorgung des Elektromagneten 15 findet der magnetische Fluss einen günstigen Weg über die Polflächen 4a - 4f, 10a - 10f des Rotors 8 und der Ankerscheibe 2, auf dem er zwischen den weichmagnetischen Bereichen 3a - 3c, 9a - 9d der beiden Kupplungsscheiben hin-und herwechseln kann. Durch die so erzeugte magnetische Anziehungskraft wird die Kupplung 1 in den Zustand der Figur 1b übergeführt. Durch die passgenaue Ausführung der konischen Polflächen 4a - 4f, 10a - 10f sowie der ebenen Stirnflächen 5a - 5c, 11a, 11b des Rotors 8 und der Ankerscheibe 2 gelangen die Kupplungsscheiben nun an allen Polflächen in Reibungskontakt und bieten zugleich einen günstigen Pfad für den magnetischen Fluss, so dass die Reibflächen 4a - 4f, 10a - 10f mit vergleichweise starken magnetischen Anziehungskräften aneinandergepresst werden. Durch die konische Anordnung der Polflächen 4a - 4f, 10a - 10f geben sich die beiden Kupplungsscheiben 2,8 zusätzlich seitlichen Halt und richten sich mechanisch zentriert aus.

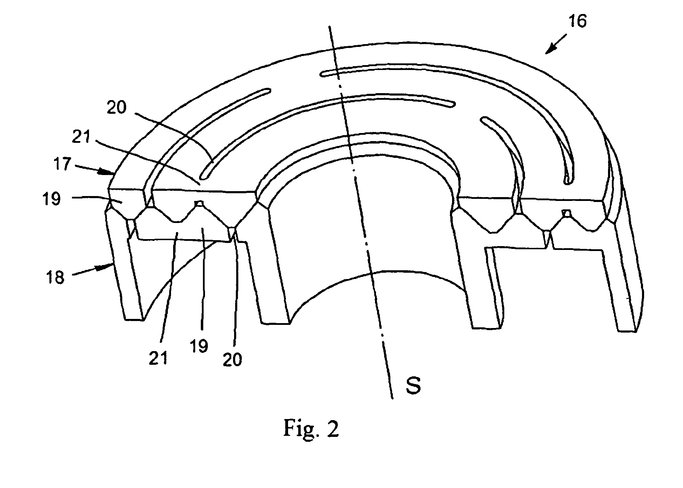

In der Figur 2 ist erkennbar, dass die magnetische Trennung der weichmagnetischen Ringbereiche als eine Folge von kreisbogenförmigen Schlitzen 20, sogenannten Nierenschlitzen, ausgebildet sind, wobei sich zwischen zwei Schlitzen 20 mit gleichem Radius jeweils eine stegartige Verbindung 21 befindet, die zwei weichmagnetische Ringbereiche mechanisch miteinander verbindet. Daher wird in diesem radialen Bereich an der eingreifenden Kupplungsscheibe die Materialstärke der weichmagnetischen Ringe durch ebene Stirnflächen begrenzt. Die ebenen Stirnflächen vermeiden zudem erhöhten magnetischen Streufluß über die Schlitze 20.

### Bezugszeichenliste:

- 1: Kupplung
- 2: Ankerscheibe
- 3a: Ringbereich der Ankerscheibe
- 3b: Ringbereich der Ankerscheibe
- 3c: Ringbereich der Ankerscheibe
- 4a: Pol- und Reibfläche
- 4b: Pol- und Reibfläche
- 4c: Pol- und Reibfläche
- 4d: Pol- und Reibfläche
- 4e: Pol- und Reibfläche
- 4f: Pol- und Reibfläche
- 5a: Stirnfläche
- 5b: Stirnfläche
- 5c: Stirnfläche
- 6a: Tiefer Rand
- 6b: Höherer Rand
- 7a: Schlitz
- 7b: Schlitz
- 8: Rotor
- 9a: Ringbereich
- 9b: Ringbereich
- 9c: Ringbereich
- 9d: Ringbereich
- 10a: Pol- und Reibfläche
- 10b: Pol- und Reibfläche
- 10c: Pol- und Reibfläche
- 10d: Pol- und Reibfläche
- 10e: Pol- und Reibfläche
- 10f: Pol- und Reibfläche
- 11a: Stirnfläche
- 11b: Stirnfläche
- 12a: Tieferer Rand
- 12b: Höherer Rand
- 13a: Schlitz
- 13b: Schlitz
- 13c: Schlitz
- 14: Elektromagnet
- 15: Elektrische Spule
- 16: Kupplungsscheiben
- 17: Ankerscheibe
- 18: Rotor
- 19: Weichmagnetischer Ringbereich
- 20: Schlitz
- 21: Steg

## Patentansprüche

1. Elektromagnetische Reibungskupplung mit zwei Kupplungsscheiben (2, 8, 16), die mehrere konzentrisch kreisförmige, weichmagnetische Ringbereiche (3a-3c, 9a-9d, 19) aufweisen, die voneinander zumindest teilweise magnetisch isoliert sind, wobei eine Kupplungsscheibe eine axial bewegliche Ankerscheibe (2, 17) umfasst, die mindestens einen magnetisch leitenden Ringbereich (3a-3c, 19) aufweist, der zwei magnetisch isolierte Ringbereiche (9a-9d, 19) der zweiten Kupplungsscheibe (8, 18) magnetisch verbindet, **dadurch gekennzeichnet, dass** die Kupplungsscheiben (2, 8, 16) im radialen Querschnitt betrachtet oszillierende Polflächen (4a-4f, 10a-10f) an den weichmagnetischen Ringbereichen (3a-3c, 9a-9d, 19) aufweisen, welche zumindest teilweise als Reibflächen (4a-4f, 10a-10f) ausgebildet sind, und über welche eine Anziehung bei einem Schalten der Kupplung stattfindet, wobei das radiale Querschnittsprofil beider Kupplungsscheiben (2, 8, 16) zumindest im Bereich der Reibflächen (4a-4f, 10a-10f) passgenau aufeinander abgestimmt ist.

2. Elektromagnetische Reibungskupplung nach Anspruch 1, **dadurch gekennzeichnet, dass** die Kupplungsscheiben (2, 8, 16) im radialen Querschnittsverlauf der weichmagnetischen Ringbereiche (3a-3c, 9a-9d, 19) jeweils ein Maximum in axialer Richtung aufweisen, das sich zur gegenüberliegenden Kupplungsscheibe hin erhebt.

3. Elektromagnetische Reibungskupplung nach einem der vorgenannten Ansprüche, **dadurch gekennzeichnet, dass** die weichmagnetischen Ringbereiche (3a-3c, 9a-9d, 19) konische Polflächen (4a-4f, 10a-10f) aufweisen.

4. Elektromagnetische Reibungskupplung nach einem der vorgenannten Ansprüche, **dadurch gekennzeichnet, dass** die weichmagnetischen Ringbereiche (3a-3c, 9a-9d, 19) einer Kupplungsscheibe (2, 8, 17, 18) umfänglich durch Spalte (7a-7b, 13a-13c, 20) voneinander getrennt sind und dass die Ringbereiche (3a-3c, 9a-9d, 19) durch Stege (21) in radialer Richtung mechanisch fest miteinander verbunden sind.

5. Elektromagnetische Reibungskupplung nach einem der vorgenannten Ansprüche, **dadurch gekennzeichnet, dass** die axial äußerste Erhebung eines weichmagnetischen Ringbereichs (3a-3c, 9a-9d, 19) einer Kupplungsscheibe (2, 8, 17, 18) höchstens bis zur axial innersten Berandung einer Polfläche (4a-4f, 10a-10f) und/oder Reibfläche in der Vertiefung der gegenüberliegenden Kupplungsscheibe reicht, wenn die Kupplungsscheiben (2, 8, 16) miteinander in Reibkontakt stehen.

6. Elektromagnetische Reibungskupplung nach einem der vorgenannten Ansprüche, **dadurch gekennzeichnet, dass** die axial tiefste Berandung einer Pol- und/oder Reibfläche (4a-4f, 10a-10f) eines weichmagnetischen Ringbereichs (3a-3c,9a-9d, 19) in einer Kupplungsscheibe (2, 8, 17, 18) an den Rand eines magnetisch isolierenden Bereichs (7a-7b, 13a-13c, 20) der Kupplungsscheibe stößt.

7. Elektromagnetische Reibungskupplung nach einem der vorgenannten Ansprüche, **dadurch gekennzeichnet, dass** zwischen weichmagnetische Ringbereiche (3a-3c, 9a-9d, 19) einer Kupplungsscheibe (2, 8, 17, 18) festes, magnetisch isolierendes Material eingebracht ist und in dem magnetisch isolierenden Bereich (7a-7b, 13a-13c) zumindest teilweise eine Reibfläche ausgebildet ist.

## Claims

1. An electromagnetic friction clutch with two clutch disks (2, 8, 16), which have a plurality of concentric, circular, soft magnetic annular regions (3a-3c, 9a-9d, 19), which are at least partially magnetically isolated from one another, wherein one clutch disk includes an axially movable anchor disk (2,17) which has at least one magnetically conductive annular region (3a-3c, 19), which magnetically connects two magnetically isolated annular regions (9a-9d, 19) of the second clutch disk (8, 18), **characterised in that** the clutch disks (2, 8, 16) have oscillating pole surfaces (4a-4f, 10a-10f) on the soft magnetic annular regions (3a-3c, 9a-9d, 19), viewed in radial cross section, which are constructed, at least partially, in the form of friction surfaces (4a-4f, 10a-10f), and via which an attraction occurs on switching of the clutch, wherein the radial cross sectional profiles of the two clutch disks (2, 8,16) are accurately matched to one another, at least in the region of the friction surfaces (4a-4f, 10a-10f).

2. An electromagnetic friction clutch as claimed in claim 1, **characterised in that** the clutch disk (2, 8, 16) each have a maximum in the axial direction in the radial cross sectional shape of the soft magnetic annular regions (3a-3c, 9a-9d, 19), which rises up towards the opposing clutch disk.

3. An electromagnetic friction clutch as claimed in one of the preceding claims, **characterised in that** the soft magnetic annular regions (3a-3c, 9a-9d, 19) have conical pole faces (4a-4f, 10a-10f).

4. An electromagnetic friction clutch as claimed in one of the preceding claims, **characterised in that** the soft magnetic annular regions (3a-3c, 9a-9d, 19) of one clutch disk (2, 8, 17, 18) are separated from one another circumferentially by gaps (7a, 7b, 13a-13c, 20) and that the annular regions (3a-3c, 9a-9d, 19) are mechanically rigidly connected together in the radial direction by webs (21).

5. An electromagnetic friction clutch as claimed in one of the preceding claims, **characterised in that** the axially outermost raised portion of one soft magnetic annular region (3a-3c, 9a-9d, 19) of one clutch disk (2, 8, 17, 18) extends at most to the axially innermost edge of a pole face (4a-4f, 10a-10f) and/or friction surface in the recess of the opposite clutch disk, when the clutch disks (2, 8, 16) are in frictional contact with one another.

6. An electromagnetic friction clutch as claimed in one of the preceding claims, **characterised in that** the axially deepest edge of one pole surface and/or friction surface (4a-4f, 10a-10f) of one soft magnetic annular region (3a-3c, 9a19c, 19) in one clutch disk (2, 8,17,18) presses against the edge of a magnetically isolating region (7a-7b, 13a-13c, 20) of the clutch disk.

7. An electromagnetic friction clutch as claimed in one of the preceding claims, **characterised in that** inserted between soft magnetic annular regions (3a-3c, 9a-9d, 19) of one clutch disk (2, 8, 17, 18) there is solid, magnetically isolating material and formed in the magnetically isolating region (7a-7b, 13a-13c), at least partially, there is a friction surface.

## Revendications

1. Embrayage à friction électromagnétique pourvu de deux disques d'embrayage (2, 8, 16) qui comportent plusieurs zones annulaires (3a-3c, 9a-9d, 19) en matériau magnétique doux et en cercles concentriques, lesquelles sont au moins partiellement isolées magnétiquement les unes des autres, un disque d'embrayage comportant un disque d'induit (2, 17) axialement mobile qui présente au moins une zone annulaire (3a-3c,19) magnétiquement conductrice reliant magnétiquement deux zones annulaires (9a-9d, 19) magnétiquement isolées du second disque d'embrayage (8, 18), **caractérisé en ce que** les disques d'embrayage (2, 8, 16) présentent, une vue en coupe radiale, des surfaces polaires (4a-4f, 10a-10f) oscillantes sur les zones annulaires (3a-3c, 9a-9d, 19) en matériau magnétique doux, lesquelles sont conçues au moins partiellement comme des surfaces de friction (4a-4f, 10a-10f), et par l'intermédiaire desquelles une attraction se produit lorsque l'embrayage est embrayé, les profils en coupe radiale des deux disques d'embrayage (2, 8, 16) étant adaptés les uns aux autres avec précision au moins dans la zone des surfaces de friction (4a-4f, 10a-10f).

2. Embrayage à friction électromagnétique selon la revendication 1, **caractérisé en ce que** les disques d'embrayage (2, 8, 16) présentent dans le tracé en coupe radiale des zones annulaires (3a-3c, 9a-9d, 19) en matériau magnétique doux respectivement un maximum dans la direction axiale, qui se dresse en direction du disque d'embrayage opposé.

3. Embrayage à friction électromagnétique selon l'une quelconque des revendications précédentes, **caractérisé en ce que** les zones annulaires (3a-3c, 9a-9d, 19) en matériau magnétique doux présentent des surfaces polaires coniques (4a-4f, 10a-10f).

4. Embrayage à friction électromagnétique selon l'une quelconque des revendications précédentes, **caractérisé en ce que** les zones annulaires (3a-3c, 9a-9d, 19) en matériau magnétique doux d'un disque d'embrayage (2, 8, 17, 18) sont séparées les unes des autres sur toute la circonférence par des fentes (7a-7b, 13a-13c, 20) et **en ce que** les zones annulaires (3a-3c, 9a-9d, 19) sont solidarisées mécaniquement à demeure dans la direction radiale par des éléments de liaison (21).

5. Embrayage à friction électromagnétique selon l'une quelconque des revendications précédentes, **caractérisé en ce que** la partie surélevée axialement la plus extérieure d'une zone annulaire (3a-3c, 9a-9d, 19) en matériau magnétique doux d'un disque d'embrayage (2, 8, 17, 18) parvient au maximum jusqu'au bord axialement le plus intérieur d'une surface polaire (4a-4f, 10a-10f) et/ou d'une surface de friction dans le creux du disque d'embrayage opposé, lorsque les disques d'embrayage (2, 8, 16) sont en contact de friction les uns avec les autres.

6. Embrayage à friction électromagnétique selon l'une quelconque des revendications précédentes, **caractérisé en ce que** le bord axialement le plus profond d'une surface polaire et/ou d'une surface de friction (4a-4f, 10a-10f) d'une zone annulaire (3a-3c, 9a-9d, 19) en matériau magnétique doux dans un disque d'embrayage (2, 8, 17, 18) bute contre le bord d'une zone magnétiquement isolante (7a-7b, 13a-13c, 20) du disque d'embrayage.

7. Embrayage à friction électromagnétique selon l'une quelconque des revendications précédentes, **caractérisé en ce qu'**un matériau solide magnétiquement isolant est introduit entre des zones annulaires (3a-3c, 9a-9d, 19) en matériau magnétique doux d'un disque d'embrayage (2, 8, 17, 18) et une surface de friction est formée au moins partiellement dans la zone magnétiquement isolante (7a-7b, 13a-13c).
